# EUROPEAN PATENT APPLICATION

(11) **EP 4 439 490 A1**
(43) Date of publication of application: **02.10.2024**
(21) Application number: 23217940.8
(22) Date of filing: 19.12.2023
(51) Int. Cl.: G06V 20/58, G06V 20/59, G06V 40/18

(54) **DISTRACTED DRIVING DETECTION METHOD, VEHICLE-MOUNTED CONTROLLER, AND COMPUTER STORAGE MEDIUM**

(30) Priority: 27.03.2023 CN 202310301251
(71) Applicant: University of Science and Technology of China, Hefei Anhui 230026 (CN); Nio Technology (Anhui) Co., Ltd, Hefei City, Anhui 230611 (CN)
(72) Inventor: ZHANG, Wei, Hefei, An Hui Province, 230026 (CN); LI, Bin, Hefei, An Hui Province, 230026 (CN); CHEN, Kang, Hefei, An Hui Province, 230026 (CN); WANG, Jiaoyang, Hefei City, Anhui 230611 (CN); ZHANG, Weifeng, Hefei City, Anhui 230611 (CN)
(74) Representative: Vossius & Partner Patentanwälte Rechtsanwälte mbB

(57) **Abstract**

The disclosure relates to the technical field of safe driving, and provides a distracted driving detection method, a vehicle-mounted controller, and a computer storage medium. The method includes: A: receiving a facial image of a driver and an external scene image that are synchronously acquired; B: obtaining coordinates of a scene target in the external scene image by using an object detection algorithm, where the scene target is an object capable of providing risk perception for the driver; C: calculating coordinates of a gaze point of the driver in the external scene image based on the facial image of the driver and the external scene image; and D: determining, by comparing the coordinates of the gaze point with the coordinates of the scene target, whether the driver is in a distracted state. The vehicle-mounted controller includes: a memory; a processor; and a computer program stored on the memory and executable on the processor, where the computer program is executed to cause a distracted driving detection method to be performed.

## Description

This patent application claims the benefit of CN Patent Application No. 202310301251.2, filed March 23, 2023, which is incorporated by reference herein in its entirety.

### Technical Field

The disclosure relates to the technical field of safe driving, and provides a distracted driving detection method, a vehicle-mounted controller, and a computer storage medium.

### Background Art

With an increasing number of automobiles and complex road conditions, distracted driving and other improper behaviors of a driver during driving of a vehicle may pose a huge threat to the safety of life and property. Currently, existing technical solutions for driver attention detection mainly focus on detection of whether a driver faces straight ahead, detection of whether a driver looks straight ahead, and fatigue feature detection such as yawning detection, blinking frequency detection, and eye closing detection. Such existing technical solutions are generally based on the detection of a fatigue feature, and can only determine eyes-off of the driver, but cannot accurately detect minds-off of the driver. Therefore, the existing technical solutions have a low detection accuracy.

### Summary

In order to solve or at least alleviate one or more of the above problems, the following technical solutions are provided. Embodiments of the disclosure provide a distracted driving detection method, a vehicle-mounted controller, and a computer storage medium, which can allow distracted driving to be converted into measurable and quantifiable information and all distracted driving scenes to be covered, thereby improving the accuracy of distracted driving detection, and maintaining the safety of life and property of users.

According to a first aspect of the disclosure, a distracted driving detection method is provided, which includes the steps of: A: receiving a facial image of a driver and an external scene image that are synchronously acquired; B: obtaining coordinates of a scene target in the external scene image by using a target detection algorithm, where the scene target is an object capable of providing risk perception for the driver; C: calculating coordinates of a gaze point of the driver in the external scene image based on the facial image of the driver and the external scene image; and D: determining, by comparing the coordinates of the gaze point with the coordinates of the scene target, whether the driver is in a distracted state.

As an alternative or addition to the above solution, in a method according to an embodiment of the disclosure, step C includes: C1: extracting eye feature information from the facial image of the driver by means of computer vision, and obtaining a line-of-sight direction of the driver; C2: obtaining a head pose of the driver by means of pose calculation in computer vision in combination with pose measurement of an inertial measurement unit; and C3: calculating the coordinates of the gaze point of the driver in the external scene image based on the line-of-sight direction and the head pose of the driver.

As an alternative or addition to the above solution, in a method according to an embodiment of the disclosure, step C1 includes: extracting an eye image from the facial image of the driver; extracting a circular region in the eye image by means of Hough Circle Transform; and performing threshold segmentation on the eye image by taking a grayscale of the circular region as a grayscale threshold, to determine a first position of a pupil center.

As an alternative or addition to the above solution, in a method according to an embodiment of the disclosure, step C1 further includes: if the circular region is not a perfect circle, performing Canny edge detection on the eye image to obtain a pupil edge; and performing least-square ellipse fitting on the pupil edge, where a fitted ellipse center is an accurate position of the pupil center.

As an alternative or addition to the above solution, in a method according to an embodiment of the disclosure, step C1 further includes: if there is a light spot region in the eye image, removing a light spot noise point, and radiating star rays outwards with the first position of the pupil center as a circle center, to detect a pupil edge point.

As an alternative or addition to the above solution, in a method according to an embodiment of the disclosure, step C1 further includes: determining an eyeball optical axis linear equation by using a Le Grand eyeball model based on the first position of the pupil center or the accurate position of the pupil center; and determining the line-of-sight direction of the driver based on the eyeball optical axis linear equation and linear relationship between the line-of-sight direction and an eyeball optical axis, where a parameter of the linear relationship is associated with a rotation matrix of kappa angles between eyeball optical axes and visual axes of two eyes.

As an alternative or addition to the above solution, in a method according to an embodiment of the disclosure, step C2 includes: extracting an initial head pose from the facial image of the driver by means of the pose calculation in computer vision; receiving a real-time pose angle detected by the inertial measurement unit; and calculating a real-time head pose of the driver based on the initial head pose and the real-time pose angle.

As an alternative or addition to the foregoing solution, in a method according to an embodiment of the disclosure, the scene target includes one or more of the following: a traffic light, a traffic sign, a pedestrian, a preceding vehicle, a rearview mirror of a host vehicle, a barricade, and other prohibited obstacles.

As an alternative or addition to the above solution, in a method according to an embodiment of the disclosure, step D includes:
during traveling, if the coordinates of the gaze point remain unchanged within a first period of time, and the first period of time is longer than or equal to a first threshold, determining that the driver is in a distracted state.

As an alternative or addition to the above solution, in a method according to an embodiment of the disclosure, step D includes: determining a valid time for which the gaze point of the driver falls on the scene target within a second period of time; calculating a ratio of the valid time to the second period of time; and if the ratio is less than or equal to a second threshold, determining that the driver is in a distracted state.

As an alternative or addition to the above solution, in a method according to an embodiment of the disclosure, a total number N₁ of scene targets in the external scene image that are obtained during a third period of time is determined; a total number N₂ of scene targets that coincide with the gaze point of the driver during the third period of time is determined; and if a ratio of N₂ to N₁ is less than or equal to a third threshold, it is determined that the driver is in a distracted state.

According to a second aspect of the disclosure, a vehicle-mounted controller is provided, which includes: a memory; a processor; and a computer program stored on the memory and executable on the processor, where the computer program is executed to cause any one of the distracted driving detection methods according to the first aspect of the disclosure to be performed.

According to a third aspect of the disclosure, a computer storage medium including instructions is provided, where the instructions, when executing, perform any one of the distracted driving detection methods according to the first aspect of the disclosure.

In the distracted driving detection solution according to one or more embodiments of the disclosure, the coordinates of the scene target in the external scene image are compared with the coordinates of the gaze point of the driver in the external scene image. In this way, distracted driving which is subjective behavior, is converted into quantized information, that is, regarding whether visual attention of the driver falls on an object in an external scene that can provide risk perception. Compared with an existing technical solution in which distracted driving detection is performed based on only whether the driver faces or looks straight ahead, this solution can enable accurate determination of whether the driver takes minds off. In addition, this solution can enable detection of distracted driving occurring before fatigue of the driver without detecting a fatigue feature of the driver, thereby improving the coverage of distracted driving detection scenarios.

### Brief Description of the Drawings

The above-mentioned and/or other aspects and advantages of the disclosure will become more apparent and more readily appreciated from the following description of various aspects in conjunction with the accompanying drawings, in which the same or similar units are denoted by the same reference numerals. In the accompanying drawings:
FIG. 1 is a schematic flowchart of an distracted driving detection method 10 according to one or more embodiments of the disclosure;
FIG. 2 is a schematic diagram of a structure of a head-mounted eye movement tracking device according to one or more embodiments of the disclosure;
FIG. 3 is a schematic diagram of a Le Grand eyeball model according to one or more embodiments of the disclosure;
FIG. 4 is a schematic diagram of an extracted eye image according to one or more embodiments of the disclosure; and
FIG. 5 is a block diagram of a vehicle-mounted controller 50 according to one or more embodiments of the disclosure.

### Detailed Description of Embodiments

The following descriptions of specific implementations are merely exemplary in nature, and are not intended to limit the disclosed technologies or the application and use of the disclosed technologies. In addition, there is no intention to be bound by any expressed or implied theory presented in the foregoing Technical Field and Background Art, or the following Detailed Description.

In the following detailed descriptions of the embodiments, many specific details are set forth to provide a more thorough understanding of the disclosed technologies. However, it is obvious for those of ordinary skill in the art that the disclosed technologies can be practiced without these specific details. In other instances, well-known features are not detailed, to avoid complicating the descriptions unnecessarily.

The terms such as "include" and "comprise" are used to indicate that in addition to the units and steps that are directly and clearly described in this specification, other units and steps that are not directly or clearly described are not excluded in the technical solutions of the disclosure. The terms such as "first" and "second" are not used to indicate sequences of units in terms of time, space, size, etc., and are merely used to distinguish between the units.

An in a distracted state driver is less likely to pay attention to a meaningful scene target (for example, a traffic participant). Therefore, coordinates of a gaze point (that is, a gaze point) of the driver within a given time window and conversion of the gaze point can clearly represent whether the driver is in a distracted state. According to the disclosure, a distracted driving indicator in a subjective sense is converted into an objective statistical method for determining whether visual attention of a driver falls on a meaningful scene target, which improves the accuracy of distracted driving detection. Various exemplary embodiments according to the disclosure will be described below in detail with reference to the accompanying drawings.

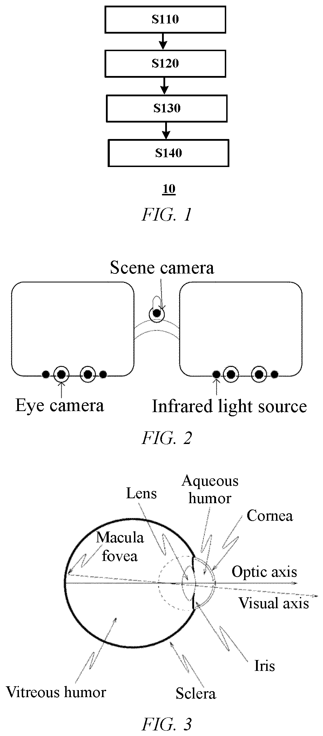

FIG. 1 is a schematic flowchart of a distracted driving detection method 10 according to one or more embodiments of the disclosure.

As shown in FIG. 1, in step S 110, a facial image of a driver and an external scene image that are synchronously acquired are received.

In one example, an image acquisition device configured to acquire the facial image of the driver and the external scene image may be disposed near a position at which the facial image of the driver can be directly acquired, for example, a rearview mirror or a console screen of a vehicle. In another example, the image acquisition device may be integrated into a head-mounted eye movement tracking device shown in FIG. 2. The head-mounted eye movement tracking device includes a head-mounted device frame, and eye cameras, infrared light sources, and a scene camera that are fixed to the frame. As shown in FIG. 2, two eye cameras are disposed for each eye, that is, a total of four eye cameras are disposed. A filter needs to be added to each eye camera, to remove interference caused by reflection of visible light on a surface of an eyeball. Since the filter can filter out all light in a visible light band, an image directly acquired by the eye camera has a low luminance and thus requires an infrared light source (for example, a near infrared light-emitting diode (LED)) for illumination while providing additional light spot information. The scene camera is preferably disposed in the middle of a nose pad of the head-mounted device frame.

It should be understood that in the embodiments of the disclosure, a camera, a lens, a video camera, a webcam, and the like all refer to devices capable of obtaining images or photos within a coverage area. They have similar meanings and are interchangeable. This is not limited in the disclosure. During image acquisition, the facial image of the driver and the external scene image may be synchronously acquired at a fixed frequency (for example, 25 frames per second).

In step S 120, coordinates of a scene target in the external scene image are obtained by using a target detection algorithm.

It should be noted that the scene target mentioned in the disclosure is an object in the external scene image that can provide risk perception for the driver. Exemplarily, the scene target may include one or more of the following: a traffic light, a traffic sign (such as a warning sign, a prohibition sign, an indication sign, a guide sign, or a pavement marking), a pedestrian, a preceding vehicle, a rearview mirror of a host vehicle, a barricade (such as a traffic cone, a bollard, or a vehicle stopper), and other prohibited obstacles (such as a suddenly falling flowerpot), and the like. It may be understood that when visual attention of the driver falls on the scene target, the driver may be aware of a risk of the scene target or a risk associated with the scene target. For example, when the visual attention of the driver falls on a pedestrian ahead, the driver may be aware of a risk of collision between the host vehicle and the pedestrian. For another example, when the visual attention of the driver falls on a speed limit sign, the driver may be aware of a risk of violating a traffic regulation if he/she does not slow down. By contrast, when the visual attention of the driver falls on a meaningless object (that is, an object, other than the scene target, in the external scene image, such as the sky or an empty space on a road), the driver cannot obtain valuable information therefrom.

Exemplarily, an external scene image obtained at a specific moment may include one or more scene targets. Therefore, in step S 120, a plurality of scene targets (for example, a sidewalk and a pedestrian) may be recognized by using the target detection algorithm, and coordinates of the plurality of scene targets can be obtained respectively. Exemplarily, the target detection algorithm may be a deep-learning-based target detection algorithm. In some embodiments, the external scene image is input into a deep learning algorithm model, which may be constructed as a multichannel convolutional neural network (CNN) (for example, dual-channel CNN) algorithm model, to recognize the presence, a position, and a size of each scene target of interest in the external scene image. Therefore, an attribute of the scene target and specific coordinates of the scene target in the external scene image are obtained. The deep learning algorithm model may be trained in advance with a plurality of sets of training data including sample images and corresponding labeling information. The labeling information indicates whether there is a scene target of interest in the sample image, such as a vehicle, a lane line, a traffic light, or a traffic sign (for example, a sign of No Tooting). In addition, the scene target may also be extracted in combination with an image processing technology, in which an image processing function includes image preprocessing, image segmentation, region of interest recognition, feature point extraction, feature classification, and the like.

In step S 130, coordinates of a gaze point of the driver in the external scene image are calculated based on the facial image of the driver and the external scene image.

Exemplarily, the image acquisition device obtains the facial image of the driver through a binocular camera, and detects and tracks a facial movement sequence by means of a convolutional neural network, which includes, for example, performing facial orientation detection, head pose detection, and blinking detection. In some embodiments, an eye image feature may be extracted by means of computer vision, and the coordinates of the gaze point may be estimated in combination with the detection of a head pose. Optionally, step S 130 includes sub-steps S 131 to S 133 as described below.

In step S 131, eye feature information is extracted from the facial image of the driver by means of computer vision, and a line-of-sight direction of the driver is obtained.

Exemplarily, the eye feature information may be extracted based on a Le Grand eyeball model shown in FIG. 3. As shown, a line of sight of the person, that is, a visual axis, is a connecting line between the gaze point and a central point of macula retinae, and cannot be directly detected and estimated. However, there is a fixed included angle, that is, a kappa angle, between the visual axis and an eyeball optical axis, that is, a connecting line between a pupil center and a spherical center of cornea, and a feature related to the eyeball optical axis is directly reflected in an eye image and may be extracted through an algorithm. Therefore, in the disclosure, the eye feature information is extracted to estimate the line-of-sight direction of the driver.

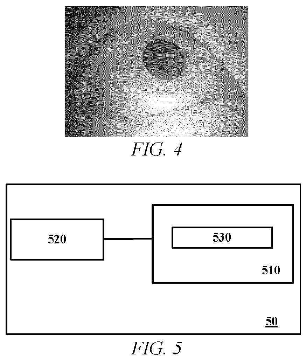

Optionally, in step S 131, an eye image is first extracted from the facial image of the driver. An example of an extracted near infrared eye image is shown in FIG. 4, in which the pupil is a near-circular low-grayscale region close to a center of the image. Therefore, a shape feature and a grayscale feature of the pupil are usually required for pupil detection and locating. One of the shape-feature-based pupil detection methods is Hough circle transform. The Hough Circle Transform may detect a circular region (which may be a perfect circle or an ellipse) in the eye image with high robustness, is not susceptible to an external factor such as light, and can well avoid impacts of other eye features such as eyelashes. However, since the pupil is usually a near-circular ellipse in the eye image, the pupil center detected by the Hough Circle Transform is usually inaccurate. One of the grayscale-feature-based pupil detection methods is a grayscale threshold segmentation method, which adopts threshold segmentation to separate a pupil region from another eye region, and detects a connected component of a binary image to obtain the pupil region. The Grayscale threshold segmentation method has a low time complexity but poor robustness, may even detect a low-grayscale region such as eyelashes in the image to be a possible pupil region, and is susceptible to an external factor such as light or an image contrast. In view of this, the disclosure provides for detection of a position of the pupil center using both the Hough Circle Transform and the grayscale threshold segmentation method. Exemplarily, based on a plurality of frames of initial eye images, a circular region therein can be extracted by means of the Hough Circle Transform, a grayscale of which circular region is determined as a grayscale threshold, and threshold segmentation is performed on a subsequently obtained eye image based on the grayscale threshold, to determine the position of the pupil center. When a threshold segmentation result is abnormal (for example, the grayscale threshold is close to a non-pupil grayscale and thus cannot be distinguished from the non-pupil grayscale), the grayscale threshold is then redetermined by means of the Hough Circle Transform. This pupil center detection method makes it possible to meet a real-time eye movement tracking requirement while ensuring robustness.

It should be noted that when the pupil is an ellipse in the eye image, neither can the Hough Circle Transform nor the grayscale threshold segmentation method implement accurate locating of an ellipse center of the pupil. Therefore, in this case, the Hough Circle Transform and the grayscale threshold segmentation method can only implement rough locating of the pupil region, and further accurate locating of the pupil center is also required. Exemplarily, in the disclosure, accurate locating of the pupil center is implemented by means of star rays and least-square ellipse fitting. Optionally, if the circular region extracted by means of the Hough Circle Transform is not a perfect circle, Canny edge detection continues to be performed on the eye image to obtain a pupil edge, and then least-square ellipse fitting is performed on the pupil edge, where a fitted ellipse center is an accurate position of the pupil center. It should further be noted that if there is a light spot region in the eye image, a light spot noise point is removed, and star rays are radiated outwards with the roughly located pupil center as a circle center, to detect a pupil edge point, such that an adverse impact of the presence of a light spot on the Canny edge detection is avoided.

After the position of the pupil center is obtained, the coordinates of the gaze point may be calculated based on a high-precision eyeball model (for example, the Le Grand eyeball model shown in FIG. 3) and in consideration of impacts of corneal refraction and a corneal aspheric property on imaging of the eye image. In the high-precision eyeball model, the cornea is modeled as a rotational ellipsoid with a rotation axis as the eyeball optical axis. Based on this model, a commonly used pupil center corneal reflection (PCCR) method in existing eye tracking methods may bring about a great error, and thus is no longer applicable. In addition, in consideration of corneal refraction, the pupil is imaged in the eye camera after corneal refraction, such that a connecting line between an optical center of the eye camera and the pupil center on an imaging plane does not include an actual pupil center. In view of this, the eyeball optical axis may be detected as a slip-robust eye feature, and an eyeball optical axis linear equation is then determined based on the position of the pupil center by using the Le Grand eyeball model. Optionally, for each eyeball, two eye cameras can be used to photograph an eye image, and the two eye cameras are calibrated in advance to determine an intrinsic parameter of each camera and a transformation matrix between the two cameras. A near infrared light source that coincides with the optical center of the eye camera is used to provide a corneal reflection light spot, an eyeball optical axis plane and a camera optical center plane are established, and the eyeball optical axis linear equation is then determined by an intersecting line of the two planes. Then, the line-of-sight direction of the driver is determined based on the eyeball optical axis linear equation and a linear relationship between the line-of-sight direction and the eyeball optical axis, where a parameter of the linear relationship is associated with a rotation matrix of kappa angles between eyeball optical axes and visual axes of two eyes.

In step S 132, a head pose of the driver is obtained by means of pose calculation in computer vision in combination with pose measurement of an inertial measurement unit. Optionally, an initial head pose is first extracted from the facial image of the driver by means of pose calculation in computer vision; then, a real-time pose angle detected by the inertial measurement unit (such as a three-axis gyroscope, a triaxial accelerometer, and a three-axis magnetometer) is received; and finally, a real-time head pose of the driver is calculated based on the initial head pose and the real-time pose angle.

In step S 133, the coordinates of the gaze point of the driver in the external scene image are calculated based on the line-of-sight direction and the head pose of the driver. Researches show that an actual gaze point of the driver is also related to the head pose of the driver. For example, while the driver gazes at a target object A, if the driver glances at a nearby target object B without changing the head pose thereof, the target object B is not an actual gaze point of the driver. For another example, if the driver gazes at a target object A first, and then turns his/her head to a target object B and gazes at the target object B, both the target object A and the target object B are actual gaze points of the driver. Exemplarily, on the basis of detecting the line-of-sight direction and the head pose of the driver, the coordinates of the gaze point in the external scene image are calculated based on a transformation matrix between a calibrated scene camera coordinate system and a calibrated eye camera coordinate system.

In step S 140, whether the driver is in a distracted state is determined by comparing the coordinates of the gaze point with the coordinates of the scene target.

In some embodiments, whether the driver is in a distracted state (for example, the driver is looking at the scene target or the sky in a trance) may be determined based on the line-of-sight direction of the driver or a time for which the coordinates of the gaze point of the driver are kept. For example, during traveling of the vehicle, if the coordinates of the gaze point remain unchanged within a first period of time, and the first period of time is longer than or equal to a first threshold, it is determined that the driver is in a distracted state. Optionally, the first threshold may be associated with an attribute of an object of gaze. For example, if the gaze point of the driver is the scene target, the first threshold is 9 s. If the gaze point of the driver is a meaningless object, the first threshold is 5 s.

In addition, as described above, the in a distracted state driver is less likely to pay attention to a meaningful scene target. Therefore, a number of times that or a time for which the coordinates of the gaze point of the driver coincide with the coordinates of the scene target within a given time window can clearly represent whether the driver is in a distracted state.

In some embodiments, whether the driver is in a distracted state may be determined based on a ratio of a time for which the gaze point of the driver falls on the scene target to a total time. Optionally, a valid time for which the gaze point of the driver falls on the scene target during a second period of time (for example, every 10 s) is determined; a ratio of the valid time to the second period of time is calculated; and if the ratio is less than or equal to a second threshold (for example, 50%), it is determined that the driver is in a distracted state.

In some embodiments, whether the driver is in a distracted state may be determined based on a ratio of a number of scene targets at which the driver gazes within a given time window to a total number of scene targets. Optionally, a total number N₁ of scene targets in the external scene image that are obtained during a third period of time (for example, every 10 s) is determined; a total number N₂ of scene targets that coincide with the gaze point of the driver during the third period of time is determined; and if a ratio of N₂ to N₁ is less than or equal to a third threshold (for example, 40%), it is determined that the driver is in a distracted state.

Optionally, the magnitude of the above-mentioned thresholds (for example, the first threshold, the second threshold, and the third threshold) may also be associated with a real-time vehicle speed. It should further be noted that numerical ranges of the preset values (such as the first threshold, the second threshold, the third threshold, the first period of time, the second period of time, and the third period of time) described herein may be set according to actual requirements, and are not limited to the numerical ranges shown in this embodiment.

Optionally, if it is determined that the driver is in a distracted state, a prompt signal may be generated to trigger an in-vehicle prompt apparatus to give a reminder to the driver of the host vehicle. Exemplarily, the in-vehicle prompt apparatus may be one or more of an in-vehicle speaker, a steering wheel vibration apparatus, and a driver seat vibration apparatus.

According to some embodiments, in the method 10, the coordinates of the scene target in the external scene image are compared with the coordinates of the gaze point of the driver in the external scene image. In this way, a subjective behavior, that is, distracted driving, is converted into quantized information, that is, regarding whether visual attention of the driver falls on an object in an external scene that can provide risk perception. Compared with an existing technical solution in which distracted driving detection is performed based on only whether the driver faces or looks straight ahead, the method 10 can enable accurate determination of whether the driver takes minds off. In addition, the method 10 can enable detection of distracted driving occurring before fatigue of the driver without detecting a fatigue feature of the driver, thereby improving the coverage of distracted driving detection scenarios.

FIG. 5 is a block diagram of a vehicle-mounted controller 50 according to one or more embodiments of the disclosure. The vehicle-mounted controller 50 includes a memory 510, a processor 520, and a computer program 530 stored on the memory 510 and executable on the processor 520, where the computer program 530 is executed to cause the method 10 shown in FIG. 1 to be performed.

In addition, as described above, the disclosure may also be implemented as a computer storage medium, in which a program for causing a computer to perform the method 10 shown in FIG. 1 is stored. Here, various forms of computer storage media, for example, a disk (for example, a magnetic disk and an optical disc), a card (for example, a memory card and an optical card), a semiconductor memory (for example, a ROM and a non-volatile memory), and a tape (for example, a magnetic tape and a cassette tape), may be used as the computer storage medium.

Various embodiments provided in the disclosure may be implemented by hardware, software, or a combination of hardware and software where applicable. In addition, without departing from the scope of the disclosure, various hardware components and/or software components described herein may be combined into a combined component including software, hardware, and/or both where applicable. Without departing from the scope of the disclosure, various hardware components and/or software components described herein may be separated into sub-components including software, hardware, or both where applicable. In addition, where applicable, it is contemplated that software components can be implemented as hardware components, and vice versa.

Software (such as program code and/or data) in the disclosure may be stored on one or more computer storage media. It is also contemplated that the software identified herein can be implemented using one or more general-purpose or special-purpose computers and/or computer systems, networked and/or otherwise. The steps described herein can be changed in order, combined into compound steps, and/or divided into sub-steps where applicable, to provide the features described herein.

The embodiments and examples proposed herein are provided to describe as adequately as possible embodiments according to the disclosure and specific applications thereof and thus enable those skilled in the art to implement and use the disclosure. However, those skilled in the art will know that the above descriptions and examples are provided only for description and illustration. The proposed description is not intended to cover all aspects of the disclosure or limit the disclosure to the disclosed precise forms.

## Claims

1. A distracted driving detection method, comprising the steps of:
A: receiving a facial image of a driver and an external scene image that are synchronously acquired;
B: obtaining coordinates of a scene target in the external scene image by using a object detection algorithm, wherein the scene target is an object capable of providing risk perception for the driver;
C: calculating coordinates of a gaze point of the driver in the external scene image based on the facial image of the driver and the external scene image; and
D: determining, by comparing the coordinates of the gaze point with the coordinates of the scene target, whether the driver is in a distracted state.

2. The distracted driving detection method according to claim 1, wherein step C comprises:
C 1: extracting eye feature information from the facial image of the driver by means of computer vision, and obtaining a line-of-sight direction of the driver;
C2: obtaining a head pose of the driver by means of pose calculation in computer vision in combination with pose measurement of an inertial measurement unit; and
C3: calculating the coordinates of the gaze point of the driver in the external scene image based on the line-of-sight direction and the head pose of the driver.

3. The distracted driving detection method according to claim 2, wherein step C1 comprises:
extracting an eye image from the facial image of the driver;
extracting a circular region in the eye image by means of Hough Circle Transform; and
performing threshold segmentation on the eye image by taking a grayscale of the circular region as a grayscale threshold, to determine a first position of a pupil center.

4. The distracted driving detection method according to claim 2 or claim 3, wherein step C1 further comprises:
if the circular region is not a perfect circle, performing Canny edge detection on the eye image to obtain a pupil edge; and
performing least-square ellipse fitting on the pupil edge, wherein a fitted ellipse center is an accurate position of the pupil center.

5. The distracted driving detection method according to claim 2, 3 or 4, wherein step C1 further comprises:
if there is a light spot region in the eye image, removing a light spot noise point, and radiating star rays outwards with the first position of the pupil center as a circle center, to detect a pupil edge point.

6. The distracted driving detection method according to any one of claims 2 to 5, wherein step C1 further comprises:
determining an eyeball optical axis linear equation by using a Le Grand eyeball model based on the first position of the pupil center or the accurate position of the pupil center; and
determining the line-of-sight direction of the driver based on the eyeball optical axis linear equation and a linear relationship between the line-of-sight direction and an eyeball optical axis, wherein a parameter of the linear relationship is associated with a rotation matrix of kappa angles between eyeball optical axes and visual axes of two eyes.

7. The distracted driving detection method according to any of claims 2 to 6, wherein step C2 comprises:
extracting an initial head pose from the facial image of the driver by means of the pose calculation in computer vision;
receiving a real-time pose angle detected by the inertial measurement unit; and
calculating a real-time head pose of the driver based on the initial head pose and the real-time pose angle.

8. The distracted driving detection method according to any of claims 1 to 7, wherein the scene target comprises one or more of the following: a traffic light, a traffic sign, a pedestrian, a preceding vehicle, a rearview mirror of a ego vehicle, a barricade, and other prohibited obstacles.

9. The distracted driving detection method according to any of claims 1 to 8, wherein step D comprises:
during traveling, if the coordinates of the gaze point remain unchanged within a first period of time, and the first period of time is greater than or equal to a first threshold, determining that the driver is in a distracted state.

10. The distracted driving detection method according to any of claims 1 to 9, wherein step D comprises:
determining a valid time for which the gaze point of the driver falls on the scene target within a second period of time;
calculating a ratio of the valid time to the second period of time; and
if the ratio is less than or equal to a second threshold, determining that the driver is in a distracted state.

11. The distracted driving detection method according to any of claims 1 to 10, wherein step D comprises:
determining a total number N₁ of scene targets in the external scene image that are obtained during a third period of time;
determining a total number N₂ of scene targets that coincide with the gaze point of the driver during the third period of time; and
if a ratio of N₂ to N₁ is less than or equal to a third threshold, determining that the driver is in a distracted state.

12. A vehicle-mounted controller, comprising: a memory; a processor; and a computer program stored on the memory and executable on the processor, wherein the computer program is executed to preform the distracted driving detection method according to any one of claims 1 to 11.

13. A non-transitory computer storage medium, comprising instructions, wherein the instructions, when executing, perform the distracted driving detection method according to any one of claims 1 to 11.
